(19) Europäisches Patentamt
European Patent Office
Office européen des brevets

(11) **EP 1 468 613 B1**

(12) **EUROPEAN PATENT SPECIFICATION**

(45) Date of publication and mention
of the grant of the patent:
**31.05.2006 Bulletin 2006/22**

(51) Int Cl.:
**A23C 13/12** (2006.01)

(21) Application number: **04008988.0**

(22) Date of filing: **15.04.2004**

(54) **Whipping cream, whipped cream and method for manufacturing the same**

Schlagsahne und Verfahren zu deren Herstellung

Crème fouettable, crème fouettée et procédé de préparation

(84) Designated Contracting States:
**AT BE BG CH CY CZ DE DK EE ES FI FR GB GR HU IE IT LI LU MC NL PL PT RO SE SI SK TR**

(30) Priority: **15.04.2003 JP 2003110287**

(43) Date of publication of application:
**20.10.2004 Bulletin 2004/43**

(73) Proprietor: **Kabushiki Kaisha Ueno Seiyaku Oyo Kenkyujo
Osaka-shi,
Osaka-fu (JP)**

(72) Inventors:
• **Ueno, Ryuzo**
  **Nishinomiya-shi**
  **Hyogo-ken (JP)**
• **Honda, Junya**
  **Nishinomiya-shi**
  **Hyogo-ken (JP)**
• **Arai, Sho**
  **Nishinomiya-shi**
  **Hyogo-ken (JP)**
• **Hasegawa, Shoko**
  **Ashiya-shi**
  **Hyogo-ken (JP)**

(74) Representative: **Albrecht, Thomas et al
Kraus & Weisert,
Thomas-Wimmer-Ring 15
80539 München (DE)**

(56) References cited:
**EP-A- 0 847 242        EP-A- 1 378 168
DE-A- 2 652 626        DE-A- 3 208 876
US-A- 4 461 777        US-A- 5 679 781
US-A1- 2002 028 276**

• **DATABASE WPI Section Ch, Week 200176 Derwent Publications Ltd., London, GB; Class D13, AN 1994-346158 XP002283762 & JP 03 230884 B2 (NISSHIN OIL MILLS LTD) 19 November 2001 (2001-11-19)**

**Description**

BACKGROUND OF THE INVENTION

FIELD OF THE INVENTION

The present invention relates to whipping cream which can provide whipped cream having stable foam structure with favorable taste and rich texture.

RELATED ART

Whipped cream is widely used for piping, cake and dessert decoration and cake and pastry fillings. Because of its pleasant taste and texture, whipped cream has been quite popular in the world.

Whipped cream may be prepared by whipping or beating cream to demulsify the cream and incorporate air bubbles therein. However, foam structure of whipped cream is often unstable and the texture or quality may be deteriorated with time after whipping. For example, liquid drainage is often observed with time after whipping.

In order to stabilize the foamed structure of whipped cream, some stabilizing agents were proposed to be added. For example, Japanese Patent Application Laid Open No. H09-37715 discloses Arabic gum as a stabilizing agent for whipping cream. Japanese Patent No. 3230884 discloses a combination of sorbitol and/or hydrogenated starch hydrolysates having a molecular weight less than 500 and cyclodextrine. However, hydrogenated starch hydrolysates contains high molecular portion which causes a problem such as increasing cream viscosity too much.

DE 2 652 626 discloses a method for preparing a whipped cream by admixing boiler milk with a polyhydric sugar-alcohol, such as xylitol, sorbitol, mannitol or dubitol and optional with pectin. EP 847 242 discloses a mixture consisting of 1,6-GPS ($\alpha$-D-glucopyranosyl-1,6-sorbitol) and 1,1 - GPM ( $\alpha$-D- glucopyranosyl-1,1-mannitol) in a ratio of 57% w/w/43% w/w...99% w/w /1% w/w. Also is disclosed a product containing this mixture, such a product being by example a foamed sugar item.

SUMMARY OF THE INVENTION

An object of the present invention is to provide whipping cream which can provide whipped cream with stable foam structure while keeping the pleasant taste and texture of conventionally available whipped cream.

Accordingly, the present invention provides whipping cream comprising, a cream product and a sugar alcohol composition, wherein the sugar alcohol composition comprises 55-100 wt% of $\alpha$-D-glucopyranosyl-1,6-sorbitol (hereinafter, referred as "GPS-6") on a dry weight basis.

In a preferred embodiment of the invention, the sugar alcohol composition comprises 56-80 wt% of GPS-6. The sugar alcohol composition may further comprises 45-0 wt% of a compound selected from the group consisting of $\alpha$-D-glucopyranosyl-1,1-mannitol (hereinafter, referred as "GPM"), $\alpha$-D-glucopyranosyl-1,1-sorbitol (hereinafter, referred as "GPS-1") and a mixture thereof on a dry weight basis.

According to the present invention, the amount of the sugar alcohol composition to be added to the cream product is not limited and may preferably be 2.5-30wt%, more preferably, 5-25 wt% of the cream product.

Preferable cream products used in the present invention contains 25-55 wt%, preferably 35-50wt% of fat-and-oil fraction.

In another aspect of the invention, whipped cream obtained by whipping or beating the whipping cream of the present invention is provided. The whipped cream of the present invention represents stabilized foam structure and causes less liquid drainage than conventionally obtained whipped creams.

In a further aspect of the present invention, a method for manufacturing whipped cream comprising the steps of: adding the above described sugar alcohol composition to a cream product, and beating the cream product to give whipped cream. According to the present invention, the sugar alcohol composition of the present invention may be added to the cream produce before or during beating the same.

In still further aspect of the present invention, an improved whipping cream or whipped cream, wherein the improvement consists of adding the above-described sugar alcohol composition to a cream product is provided.

In still further aspect of the present invention, use of the above-described sugar alcohol composition for manufacturing a whipping cream or,whipped cream is provided.

DETAILED DESCRIPTION OF THE INVENTION

The sugar alcohol composition of the present invention comprises one or more sugar alcohols. The composition comprises the defined amount of GPS-6 and may further comprise other sugar alcohols such as GPM, GPS-1, sorbitol and maltitol. According to the present invention, the sugar alcohol composition may be in any form including aqueous solution, powder, granule and syrup obtained by boil down the aqueous solution, and the granular or powdery composition are especially preferable since they are easy to handle.

According to the present invention, the cream product may be any of those obtained on the market as cream for whipping. That is, the cream product may be not only those defined as "cream" under Ministerial Ordinance on Ingredient Specifications for Milk and Dairy Products, Ministry of Health, Labor and Welfare of Japan but also cream products containing conventional emulsifier, stabilizer or the like. In addition, the cream product may be those obtained by substituting whole or a part of milk fat in cream with vegetable oil; or those obtained by mixing whole milk, reconstituted milk, modified milk or skimmed milk with milk' fat and/or vegetable oil. Accordingly, the fat-and-oil fraction in the cream product may be milk fat, vegetable oil or a mixture thereof. Examples of vegetable oils used for preparing the cream product used in the present invention may include, but not limited to, cocoanut oil, palm oil, palm kernel oil, soybean oil, canola oil and corn oil.

The amount of fat-and-oil fraction in the cream product used in the present invention may be in the range preferable for whipping cream, i.e. 25-55wt%, especially 35-50wt%.

The cream products used in the present invention may further comprise additives known to be incorporated in conventional cream products such as flavoring agents and preservatives.

According to the present invention, a conventional whipping cream can be improved by adding the above-described sugar alcohol composition to the whipping cream or by substituting at least a part of sweeteners in the whipping cream with the sugar alcohol composition.

GPS-6 used in the present invention can be prepared by hydrogenating isomaltulose, which is obtained from sucrose by means of glucosyl transferase. It may be also prepared by hydrogenation of isomaltose, which is also obtained from sucrose. GPS-6 obtained from isomaltulose is preferable for economical reasons.

In addition to GPS-6, GPM is also produced by the hydrogenation of isomaltulose. Further, hydrogenation of trehalulose, a byproduct of isomaltose from sugar, gives GPS-1. Therefore, GPS-6, GPM and GPS-1 can be prepared by hydrogenating a mixture of isomaltulose and trehalulose, which is obtained from sucrose by means of glucosyl transferase.

The sugar alcohol composition of the instant invention comprising GPS-6 and optionally GPS-1 and GPM in the specified proportions may be prepared from thus obtained mixture of GPS-6, GPM and GPS-1 by separating the respective compound by means of a known procedure such as crystallization or chromatography, and then adjusting the proportions. The sugar alcohol composition may also be prepared from commercially available reduced isomaltulose product, such as Palatinit® (Shin Mitsui Sugar Co. Ltd., Tokyo, Japan) a product consisting essentially of approximately equimolar GPS-6 and GPM, or IsoMaltidex® (Cerestar Japan Ltd., Tokyo, Japan), in the same manner as above. The sugar alcohol Composition of the invention may be prepared by simply mixing commercially available GPS-6, GPM and GPS-1 to give the above-defined proportions.

The sugar alcohol composition of the present invention comprises equal to or more than 55Wt% of GPS-6 on the dry weight basis.

According to the present invention, the sugar alcohol composition comprising GPS-6 as a main ingredient will significantly suppress liquid drainage from the whipped cream. The cream product used for manufacturing the whipping cream or whipped cream of the present invention may comprise additives which are known to be used for conventional whipping creams. For example, emulsifiers such as sucrose fatty acid ester and stabilizers such as Arabic gum. The additives may be added to the whipping cream of the present invention or a commercially available cream product containing said additives may be employed The combined use of the sugar alcohol composition of the present invention and the additives such as emulsifiers or stabilizer may provide more stable and rich whipped cream.

The whipping cream and the whipped cream of the present invention is sweetened to a certain extent by means of the sugar alcohol composition described as above. In addition to the sugar alcohol composition, the whipping cream or whipped cream of the present invention may further comprise sweeteners other than the sugar alcohol composition to provide desired sweetness. The amount of other sweeteners may be determined based on the desired sweetness.

The present invention will be understood more readily with reference to the following examples. However, these examples are intended only to illustrate the invention and are not to be construed to limit the scope of the invention. In the following examples, "%" represent "wt%" except for otherwise specified.

Examples 1,2 and comparative examples 1-5

Effect of sugar alcohol composition on Stabilizing Whipped Cream

Effects of various sugar alcohol compositions and other sweeteners on stabilizing whipped cream were compared. The stability was evaluated by the liquid drainage from the whipped creams. The less the liquid drainage rate represents the more stable foam structure of the whipped cream. The sweeteners used are shown below.

Example 1

GPS-6 preparation consisting of GPS-6 56%, GPM 32%, GPS-1 4%, Sorbitol 7% and others 1% (Dry. weight basis. "Others" includes other sugar alcohols such as mannitol)

Example 2:

GPS-6 100% (Wako Pure Chemical Industries, Ltd. Osaka, Japan)

Comparative Example 1:

granulated sugar

Comparative Example 2:

equimolar mixture of GPS-6 and GPM (Palatinit®, Shin Mitsui Sugar Co., Ltd., Tokyo Japan)

Comparative Example 3:

GPM preparation consisting of GPS-6 9% and GPM 91% (Dry weight basis)

Comparative Example 4:

crystalline maltitol (Lesys® Towa Kaseikogyo, Tokyo, Japan)

Comparative Example 5:

Powdered sorbitol (Powdered Sorbitol-UENO®, Ueno fine chemicals Industry, Ltd., Osaka, Japan)

Method

Fresh cream (milk fat content: 47.0%, containing emulsifier: Meiji Tokachi Fresh 100, Meiji Dairies Corporation, Tokyo Japan) about 190g was put in a stainless bowl (opening diameter: 21cm) and cooled to 4°C over iced-water bath. 21g of the sweetener shown above was added to the cream and the mixture was beaten for 2 minutes with the electric mixer (#MK-H3, Matsushita Electric Industries Co., Ltd. Osaka, Japan) until a firm peak was acquired

The obtained whipped cream 10g was put in a glass funnel (diameter: 50mm), the funnel was placed in temperature controlled chamber and kept at 25°C. A glass beaker(50ml) was placed under the funnel and the liquid drainage was collected. The amount of liquid drainage was measured at 1, 2 and 3 hours and liquid drainage rate was calculated by the formula below:

$$\text{Liquid Drainage Rate (\%)} = (\text{(Liquid drainage (g))/whipped cream (g))} \times 100.$$

The less the liquid drainage rate represents the more stable foam structure of the whipped cream.

Result

Results are shown in Table 1. Those results are average value of two trials.

No or very little liquid drainage was observed even after 3 hours in Example 1 and 2. In comparative example 1 i.e. whipped cream admixed with granulated sugar as a sole sweetener, liquid drainage rate of more than 1% was observed after one hour. This means the whipped cream of Comparative Example 1 was unstable. In comparative examples 2-5, i.e. whipped creams with sugar alcohols other than those defined in the present invention, certain extent of liquid drainage was observed after 1 or 2 hours.

TABLE 1 Liquid Drainage Rates (%)

| Sweeteners | Liquid Drainage Rate(%) | | |
|---|---|---|---|
| | 1hr. | 2hr. | 3hr. |
| Example 1: GPS-6 preparation | 0.0 | 0.0 | 0.0 |
| Example 2: GPS-6 100% | 0.0 | 0.0 | 0.2 |
| Comp. Ex. 1: granulated sugar | 1.2 | 2.6 | 3.2 |
| Comp. Ex. 2: GPS-6 50%+GPM 50% | 0.0 | 0.7 | 1.4 |
| Comp. Ex. 3: GPM preparation | 0.0 | 0.5 | 0.8 |
| Comp. Ex. 4: maltitol | 0.9 | 1.8 | 2.4 |
| Comp. Ex. 5: sorbitol | 0.0 | 1.2 | 2.0 |

Example 3 and Comparative Example 6

Stabilizing effect sugar alcohol composition of the present invention when used in combination with granulated sugar

The foam stabilizing effect of sugar alcohol composition used in Example 1 (GPS-6 preparation) when used in combination with granulated sugar was examined. Liquid drainage rate of whipped creams prepared according to the same manner as above using a mixture of equal amount of GPS preparation 1 and granulated sugar (Example 3) or a mixture of equal amount of crystalline trehalose (Treha®, Hayashibara Co., Ltd. Okayama, Japan) and granular sugar (Comparative Example 6) as sweetener.

Result

Results are shown in Table 2. Less liquid drainage was observed in example 3 than comparative example 6. This result means that the sugar alcohol composition used in the present invention can stabilize foam structure of whipped cream even if used in combination with granulated sugar.

TABLE 2 Effect of the sugar alcohol composition in combination with granulated sugar

| | sweeteners | liquid drainage rate (%) | | |
|---|---|---|---|---|
| | | 1 hr. | 2 hr. | 3hr. |
| Example 3 | granulated sugar + GPS-6 preparation | 0.0 | 0.5 | 0.9 |
| Comp. Ex. 6 | granulated sugar + crystalline trehalose | 0.0 | 1.0 | 1.5 |

Examples 4 and 5

Evaluation of the taste and texture of the whipped creams

Whipped cream was prepared in the same manner as Example 1 using sweeteners shown below. Seven people evaluated sweetness, texture and aftertaste of the whipped cream of Examples 4 and 5 respectively in comparison to the reference whipped cream, and scored on a scale of -4 to +4 by means of the scoring method. The significance of differences over the reference whipped cream was determined according to the method disclosed in Furukawa Hideko, *"Oishisa wo Hakaru* (Evaluation, of palatability), Saiwai Shobo, Tokyo, Japan 1994". $P < 0.05$ was considered significant.

Sweeteners used in this example are below:

Example 4

Granulated sugar 50% + GPS-6 preparation 50%

Example 5:

Granulated sugar 75% + GPS-6 preparation 25%

Reference Whipped Cream:

Granulated sugar 100%

Evaluation Criteria

Sweetness, texture and aftertaste of the whipped creams of Examples were compared to those of the reference whipped cream and scored according to the criteria shown below. In each criterion, "0" means "equal to the reference whipped cream".

Sweetness: -4 (not sweet) to +4 (sweet)
Texture: -4 (not rich) to +4 (rich)
Aftertaste: -4 (strong aftertaste) to +4 (without bad aftertaste)

Result

The average scores are shown in Table 3. The whipped cream of Example 4 was evaluated as less sweet, less aftertaste than the reference whipped cream. The whipped cream of Example 5 was evaluated as preferable with rich texture.

Table 3

|  | sweetness | texture | aftertaste |
| --- | --- | --- | --- |
| Example 4 | -2.0 less sweet | 0.4 no significance | 1.4 less aftertaste |
| Example 5 | -0.7 no significance | 1.3 rich texture | 0.7 no significance |

**Claims**

1. Use of a sugar alcohol composition comprising 55-100 wt% of $\alpha$-D-glucopyranosyl-1,6-sorbitol on a dry weight basis for manufacturing whipping cream or whipped cream from a cream product.

2. Use according to Claim 1, wherein the sugar alcohol composition comprises 55-100 wt% of $\alpha$-D glucopyranosyl-1,6-sorbitol and 45-0 wt% of a compound selected from the group consisting of $\alpha$-D-glucopyranosyl-1,1-mannitol, $\alpha$-D-glucopyranosyl-1,1-sorbitol and a mixture thereof on a dry weight basis.

3. Use according to Claim 1 or 2, wherein the amount of the sugar alcohol composition to be added to the cream product is 2.5-30wt% of the cream product.

4. Use of any one of Claims 1-3, wherein the cream product contains 25-55 wt% of fat-and-oil fraction.

5. A method for manufacturing whipped cream, comprising the steps of adding a sugar alcohol composition comprising 55-100 wt% of $\alpha$-D-glucopyranosyl-1,6-sorbitol on a dry weight basis to a cream product, and beating the cream product to give whipped cream.

6. The method of Claim 5, wherein the sugar alcohol composition comprises 55-100 wt% of $\alpha$-D-glucopyranosyl-1,6-sorbitol and 45-0 wt% of a compound selected from the group consisting of $\alpha$-D-glucopyranosyl-1,1-mannitol, $\alpha$-D-glucopyranosyl-1,1-sorbitol and a mixture thereof on a dry weight basis.

7. The method of Claim 5 or 6, wherein the amount of the sugar alcohol composition added to the cream product is 2.5-30 wt% of cream.

8. The method of any one of claims 5-7, wherein cream contains 25-55 wt% of fat-and-oil fraction.

9. Whipping cream or whipped cream comprising a cream product and a sugar alcohol composition, wherein the sugar alcohol composition comprises 55-100 wt% of $\alpha$-D-glucopyranosyl-1,6-sorbitol on a dry weight basis.

10. The whipping cream or whipped cream of Claim 9, wherein the sugar alcohol composition comprises 55-100 wt% of $\alpha$-D-glucopyranosyl-1,6-sorbitol and 45-0 wt% of a compound selected from the group consisting of $\alpha$-D-glucopyranosyl-1,1-mannitol, $\alpha$-D-glucopyranosyl-1,1-sorbitol and a mixture thereof on a dry weight basis

11. The whipping cream or whipped cream of Claim 9 or 10, which comprises the sugar alcohol composition in an amount of 2.5-30 wt% of the cream product.

12. The whipping cream or whipped cream of any one of Claims 9-11, wherein the cream product contains 25-55 wt% of fat-and-oil fraction.

**Patentansprüche**

1. Verwendung einer Zuckeralkoholzusammensetzung umfassend 55-100 Gew.-% $\alpha$-D-Glucopyranosyl-1,6-sorbit auf Trockengewichtsbasis zur Herstellung von Sahne zum Aufschlagen oder von Schlagsahne aus einem Sahneprodukt.

2. Verwendung nach Anspruch 1, wobei die Zuckeralkoholzusammensetzung 55-100 Gew.-% $\alpha$-D-Glucopyranosyl-1,6-sorbit und 45-0 Gew.-% einer Verbindung ausgewählt aus der Gruppe, bestehend aus $\alpha$-D-Glucopyranosyl-1,1-mannit, $\alpha$-D-Glucopyranosyl-1,1-sorbit und einem Gemisch davon, auf Trockengewichtsbasis, umfasst.

3. Verwendung nach Anspruch 1 oder 2, wobei die Menge der dem Sahneprodukt zuzusetzenden Zuckeralkoholzusammensetzung 2,5-30 Gew.-% des Sahneprodukts beträgt.

4. Verwendung nach einem der Ansprüche 1 bis 3, wobei das Sahneprodukt 25-55 Gew.-% einer Fett- und Ölfraktion enthält.

5. Verfahren zur Herstellung von Schlagsahne umfassend die Schritte der Zugabe einer Zuckeralkoholzusammensetzung, umfassend 55-100 Gew.-% $\alpha$-D-Glucopyranosyl-1,6-sorbit, auf Trockengewichtsbasis, zu einem Sahneprodukt und Schlagen des Sahneprodukts, um die Schlagsahne zu erhalten.

6. Verfahren nach Anspruch 5, wobei die Zuckeralkoholzusammensetzung 55-100 Gew.-% $\alpha$-D-Glucopyranosyl-1,6-sorbit und 45-0 Gew.-% einer Verbindung ausgewählt aus der Gruppe, bestehend aus $\alpha$-D-Glucopyranosyl-1,1-mannit, $\alpha$-D-Glucopyranosyl-1,1-sorbit und einem Gemisch davon, auf Trockengewichtsbasis, umfasst.

7. Verfahren nach Anspruch 5 oder 6, wobei die Menge der dem Sahneprodukt zugesetzten Zuckeralkoholzusammensetzung 2,5-30 Gew.-% des Sahneprodukts beträgt.

8. Verfahren nach einem der Ansprüche 5 bis 7, wobei die Sahne 25-55 Gew.-% einer Fett- und Ölfraktion enthält.

9. Sahne zum Aufschlagen oder Schlagsahne umfassend ein Sahneprodukt und eine Zuckeralkoholzusammensetzung, wobei die Zuckeralkoholzusammensetzung 55-100 Gew.-% $\alpha$-D-Glucopyranosyl-1,6-sorbit, auf Trockengewichtsbasis, umfasst.

10. Sahne zum Aufschlagen oder Schlagsahne nach Anspruch 9, wobei die Zuckeralkoholzusammensetzung 55-100 Gew.-% $\alpha$-D-Glucopyranosyl-1,6-sorbit und 45-0 Gew.-% einer Verbindung ausgewählt aus der Gruppe, bestehend aus $\alpha$-D-Glucopyranosyl-1,1-mannit, $\alpha$-D-Glucopyranosyl-1,1-sorbit und einem Gemisch davon, auf Trockengewichtsbasis, umfasst.

11. Sahne zum Aufschlagen oder Schlagsahne nach Anspruch 9 oder 10, umfassend die Zuckeralkoholzusammensetzung in einer Menge von 2,5-30 Gew.-% des Sahneprodukts.

12. Sahne zum Aufschlagen oder Schlagsahne nach einem der Ansprüche 9 bis 11, wobei das Sahneprodukt 25-55 Gew.-% einer Fett- und Ölfraktion enthält.

**Revendications**

1. Utilisation d'une composition d'alcool glucidique comprenant 55 à 100 % en poids de α-D-glucopyranosyl-1,6-sorbitol sur une base en poids sec pour fabriquer de la crème à fouetter ou de la crème fouettée à partir d'un produit crémeux.

2. Utilisation selon la Revendication 1, dans laquelle la composition d'alcool glucidique comprend de 55 à 100 % en poids de α-D-glucopyranosyl-1,6-sorbitol et de 45 à 0 % en poids d'un composé choisi parmi le groupe consistant en α-D-glucopyranosyl-1,1-manitol, α-D-glucopyranosyl-1,1-sorbitol et un mélange de ceux-ci sur une base en poids sec.

3. Utilisation selon la Revendication 1 ou 2, dans laquelle la quantité de composition d'alcool glucidique à ajouter au produit crémeux est de 2,5 à 30 % en poids du produit crémeux.

4. Utilisation selon l'une quelconque des Revendications 1 à 3, dans laquelle le produit crémeux contient de 25 à 55 % en poids de fraction lipidique.

5. Procédé de fabrication de crème fouettée, comprenant les étapes consistant à ajouter une composition d'alcool glucidique comprenant de 55 à 100 % en poids de α-D-glucopyranosyl-1,6-sorbitol sur une base en poids sec à un produit crémeux et à battre le produit crémeux de façon à obtenir une crème fouettée.

6. Procédé selon la Revendication 5, dans lequel la composition d'alcool glucidique comprend de 55 à 100 % en poids de α-D-glucopyranosyl-1,6-sorbitol et 45 à 0 % en poids d'un composé choisi parmi le groupe consistant en α-D-glucopyranosyl-1,1-manitol, α-D-glucopyranosyl-1,1-sorbitol et un mélange de ceux-ci sur une base en poids sec.

7. Procédé selon la Revendication 5 ou 6, dans lequel la quantité de composition d'alcool glucidique ajoutée au produit crémeux est de 2,5 à 30 % en poids de crème.

8. Procédé selon l'une quelconque des Revendications 5 à 7, dans lequel la crème contient de 25 à 55 % en poids de fraction lipidique.

9. Crème à fouetter ou crème fouettée comprenant un produit crémeux et une composition d'alcool glucidique, dans laquelle la composition d'alcool glucidique comprend de 55 à 100 % en poids de α-D-glucopyranosyl-1,6-sorbitol sur une base en poids sec.

10. Crème à fouetter ou crème fouettée selon la Revendication 9, dans laquelle la composition d'alcool glucidique comprend de 55 à 100 % en poids de α-D-glucopyranosyl-1,6-sorbitol et 45 à 0 % en poids d'un composé choisi parmi le groupe consistant en α-D-glucopyranosyl-1,1manitol, α-D-glucopyranosyl-1,1-sorbitol et un mélange de ceux-ci sur une base en poids sec.

11. Crème à fouetter ou crème fouettée selon la Revendication 9 ou 10, laquelle comprend la composition d'alcool glucidique dans une quantité de 2,5 à 30 % en poids du produit crémeux.

12. Crème à fouetter ou crème fouettée selon l'une quelconque des Revendications 9 à 11, dans laquelle le produit crémeux contient de 25 à 55 % en poids de fraction lipidique.